# EUROPEAN PATENT SPECIFICATION

(11) **EP 2 027 556 B1**
(45) Date of publication and mention of the grant of the patent: **08.06.2011**
(21) Application number: 07777551.8
(22) Date of filing: 10.01.2007
(51) Int. Cl.: G06K 7/10, G06K 19/07, G06F 17/30

(54) **RFID TAGGING OF MEDIA/MULTIMEDIA FILES**
RFID-ETIKETTIERUNG VON MEDIA-/MULTIMEDIADATEIEN
MARQUAGE RFID DE FICHIERS MÉDIA/MULTIMÉDIA

(30) Priority: 09.06.2006 US 804292 P; 20.07.2006 US 458716
(43) Date of publication of application: 25.02.2009
(73) Proprietor: Sony Ericsson Mobile Communications AB, 221 88 Lund (SE)
(72) Inventor: DUNKO, Gregory, A., Cary, North Carolina 27511 (US)
(74) Representative: Charles, Glyndwr
(86) International application number: PCT/US2007/060303
(87) International publication number: WO 2007/146446

(56) References cited:
- GB-A- 2 397 149
- JP-A- 2006 018 498

## Description

### BACKGROUND ART

Portable mobile communications devices such as mobile phones are becoming more sophisticated and include many new features and capabilities. Features that are commonly integrated into today's mobile phones include digital cameras / video cameras, MP3 music players, Bluetooth^{™} Text and Multi-media messaging services, and more. Another less common feature that will likely become more common is an RFID transponder tag reader.

RF transponder tag systems pass relatively small amounts of data from an RF transponder tag to an RFID transponder tag reader for a variety of applications including, but not limited to, inventory tracking, toll collections, and e-commerce facilitation. Most of the applications generally involve conveying an account number to be debited for a service provided at a point of service.

The data is not limited, however, to account numbers or payment information. The data can be text, URL, numerical, image thumbnail, or a short audio file, as well. Thus, a strategically located RFID transponder tag can convey a variety of data to a nearby RFID transponder tag reader for a variety of uses.

JP 2006018498A discloses a digital camera that provides access to image file only when the file's identification corresponds to an ID added to a header file. An RFID tag is mounted to an attachment of the digital camera. An ID of the attachment is stored in the RFID tag. The digital camera stores a captured image in a JPEG format file and a CPU adds the ID of the attachment to a header of the file. The CPU gives a viewing right for the image to only a user having the attachment with the corresponding ID.

### DISCLOSURE OF INVENTION

A system, method, and computer program product is disclosed for tagging a media file created by a device possessing an RFID transponder tag reader with RFID transponder tag content data. The RFID transponder tag reader equipped device creates a media or multimedia file and determines whether a data containing RFID transponder tag is present and within range of the RFID transponder tag reader. If so, the user is prompted, if the data-containing RFID transponder tag is desired, and a connection is established between the data-containing RFID transponder tag and the RFID transponder tag reader such that the data from the RFID transponder tag is received via the RFID transponder tag reader. The user is then prompted whether it is desired to attach the received RFID transponder tag data to the media/multimedia file and if so, the received data is then attached to the media file to create a tagged media file.

The device possessing the RFID transponder tag reader can be a mobile camera phone, a digital camera, an audio/video recorder, or a digital video camera. The data contained by the RFID transponder tag can be text, URL, numerical, image thumbnail, or a short audio file.

### BRIEF DESCRIPTION OF THE DRAWINGS

FIG. 1 is a block diagram of system components in accordance with an embodiment of the present invention.
FIG. 2 is a block diagram of an exemplary RFID reader equipped mobile camera phone or digital/video camera for use in accordance with an embodiment of the present invention.
FIG. 3 is a flow chart of a method for tagging media files with RFID content in accordance with an embodiment of the present invention.

### BEST MODE(S) FOR CARRYING OUT THE INVENTION

The following detailed description of embodiments refers to the accompanying drawings, which illustrate specific embodiments of the invention. Other embodiments having different structures and operations do not depart from the scope of the present invention.

As will be appreciated by one of skill in the art, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java, Smalltalk, C++ or the like. However, the computer program code for carrying out operations of the present invention may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

RFID transponder tag technology utilizes electromagnetic or electrostatic coupling in the radio frequency (RF) portion of the electromagnetic spectrum. An RFID transponder tag reader includes at least an antenna and transceiver. An RF signal is transmitted from the RFID transponder tag reader that activates an RFID transponder tag when within a predetermined range of the RFID transponder tag. When an RFID transponder tag has been activated, it transmits information back to the RFID transponder tag reader. In the case of a passive RFID transponder tag the RFID transponder tag may be energized by a time-varying electromagnetic RF wave generated by the RFID transponder tag reader. When the RF field passes through the antenna coil associated with the RFID transponder tag, a voltage is generated across the coil. This voltage is ultimately used to power the RFID transponder tag, and make possible the RFID transponder tag's return transmission of information to the RFID transponder tag reader.

Any type of RFID transponder tag may be used in connection with the present invention. For example, an RFID transponder tag can be either active or passive. An active RFID transponder tag requires an internal battery. A passive RFID transponder tag does not require a dedicated power source, but rather obtains operating power generated from the reader. Further, tags may come in a variety of shapes and sizes, but are generally based on a custom designed silicon integrated circuit. Any transponder/tag may be used in connection with the present invention, and the tag type, size, etc. depends on the particular environment and purpose in which physical browsing in accordance with the invention will be employed.

Typically an RFID transponder tag carries no more than 2KB of data-enough to store some basic information about the item it is on. The distance from which an RF transponder tag can be read is called its read range. Read range depends on a number of factors, including the frequency of the radio waves uses for the RFID transponder tag and reader communication, the size of the RFID transponder tag antenna, the power output of the RFID transponder tag reader, and whether the RFID transponder tags have a battery to broadcast a signal or gather energy from a reader and merely reflect a weak signal back to the reader. Battery-powered RFID transponder tags typically have a read range of 300 feet (100 meters). High-frequency RFID transponder tags have a read range of three feet or less. UHF RFID transponder tags have a read range of 20 to 30 feet under ideal conditions.

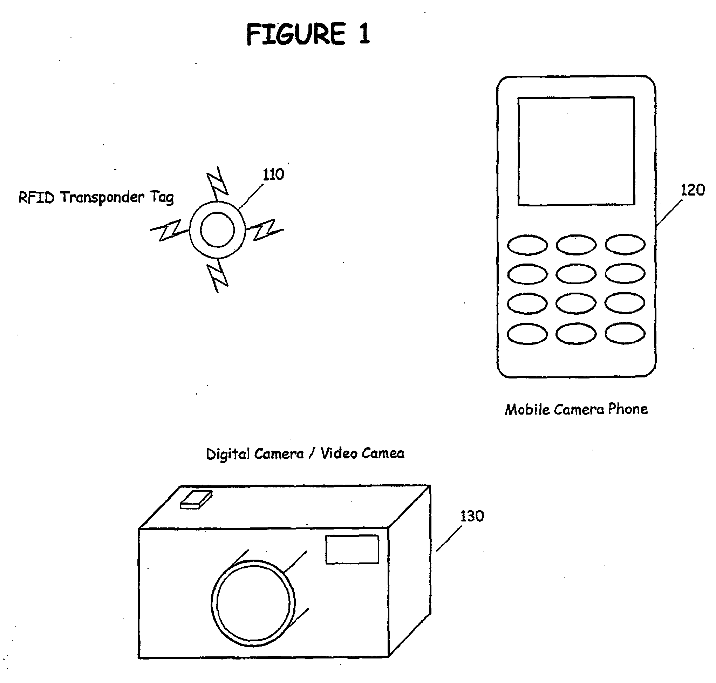

Figure 1 is a block diagram of system components in accordance with an embodiment of the present invention. An RFID transponder tag 110 is located at a point of interest. The point of interest could be, for instance, a historical monument or a scenic overlook. The RFID transponder tag 110 would contain data pertinent to the point of interest. The data could conceivably be textual or even audio.

For example, an RFID transponder tag I 10 could be placed at a location such as the Lincoln Memorial in a popular position for taking photographs. The RFID transponder tag 110 would contain data about the Lincoln memorial that could be passed to a device having an RFID transponder tag reader. A RFID transponder tag reader could be present in a mobile camera phone 120 or even a digital camera / video camera 130. In such cases, a user could take a picture of the Lincoln Memorial and also receive data about the Lincoln Memorial from the RFID transponder tag 110 all in the same device 120, 130.

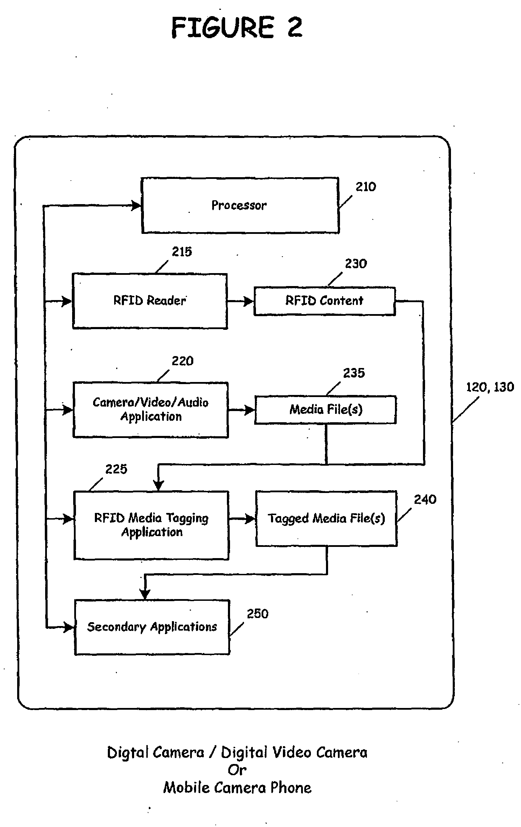

Figure 2 is a block diagram of an exemplary RFID transponder tag reader equipped mobile camera phone 120 or digital/video camera 120 for use in accordance with an embodiment of the present invention. The RFID transponder tag reader equipped device (120, 130) includes a processor 210 for executing software, firmware, and hardware disposed throughout the device such as an RFID transponder tag reader 215, a camera/video application 220, an RFID media tagging application 225, and other secondary applications 250. Secondary applications 250 include, but are not limited to, messaging services, e-mail services, games, etc.

Also included within device (120, 130) are storage mechanisms for received RFID transponder tag content 230, media/multimedia files 235, and tagged media/multimedia files 240. Received RFID transponder tag content 230 represent data received from RF transponder tags. Media/multimedia files 235 represent digital pictures taken by an associated camera device, video files, audio files (music, sound recordings), and text files. Media/multimedia files 235 can be operated on by secondary applications 250 for a variety of purposes including, but not limited to, displaying pictures, playing music (audio), sending the media/multimedia files 235 to other mobile (e,g., SMS, MMS) or computer (e.g., e-mail) users. Tagged media/multimedia files 240 can be operated on similar to ordinary media files 235. A tagged media/multimedia file 240, however, is a combination of an ordinary media/multimedia file 235 and RFID transponder tag content 230 such that the RFID transponder tag content 230 adds value or interest to the ordinary media/multimedia file 235.

A tagged media/multimedia file can be, for instance, a digital photo of the Lincoln Memorial combined with a textual or audio RFID transponder tag content file 230. The combination provides the user with an enhanced media/multimedia file that can be enjoyed locally on the device (120, 130) or sent to another user/device via a secondary application 250. In one possible implementation, when a tagged media/multimedia file is viewed, a text scroll at the bottom of the display can provide the user with the RFID transponder tag content data or an audible description of the Lincoln Memorial. Thus, the user can see the picture taken of the Lincoln Memorial and receive information about the Lincoln Memorial contemporaneously. RFID transponder tag content could provide data such as the date the Lincoln Memorial was constructed, the materials involved, the history behind the construction, etc. This "tagging" could be further supplemented by combining this information with locally generated time/date or a GPS position (derived from mobile).

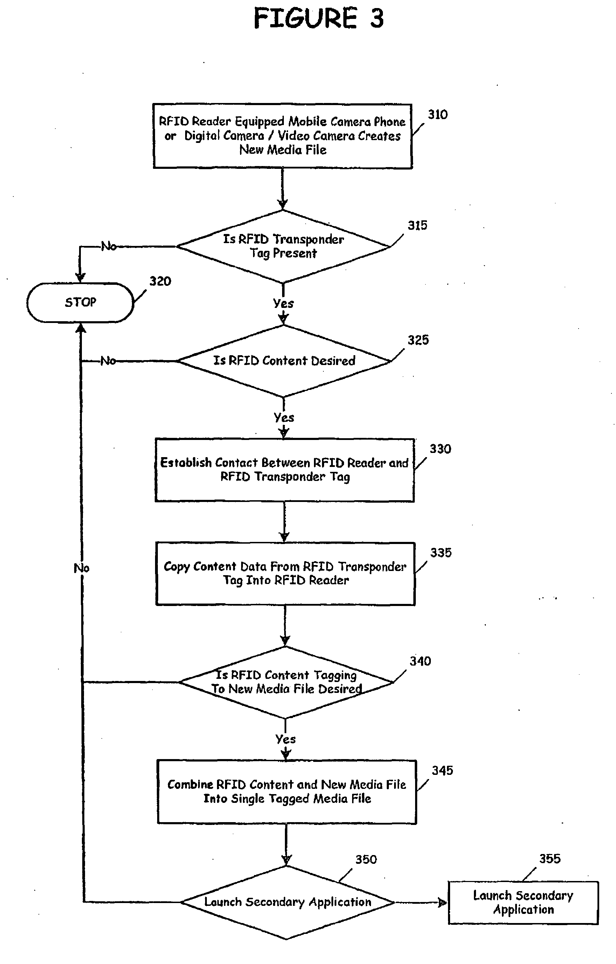

Figure 3 is a flow chart of a method for tagging media/multimedia files with RFID transponder tag content in accordance with an embodiment of the present invention. An RFID reader equipped device such as a mobile camera phone or a digital still/video camera creates a new media/multimedia file 310 by taking a picture or recording some audio/video of a point of interest. The RFID reader equipped device senses if a data containing RFID transponder tag is present and within range 315. If not, the media/multimedia file is stored normally and the process is stopped 320. If the RFID reader equipped device senses the presence of a nearby RFID transponder tag, the RFID reader equipped device prompts the user if the content contained on the RFID transponder tag is desired by the RFID reader equipped device 325. If the user responds negatively the process again terminates 320 without affecting the normal operations to the media/multimedia file. If the user responds affirmatively a connection is established between the device's RFID transponder tag reader and the data containing RFID transponder tag 330. The content is then passed from the RFID transponder tag to the RFID transponder tag reader 335. The device then prompts the user whether to attach or tag the new media/multimedia file with the RFID transponder tag content 340. If tagging is not desired the process terminates 320. Otherwise, the RFID transponder tag content is combined with the media/multimedia file into a new tagged media/multimedia file 345.

A further option will prompt the user to launch a secondary application 350 upon completion of creating a tagged media/multimedia file. If the user accepts this option a secondary application is launched 355. Otherwise the process is terminated 320.

By necessity the method sets out steps in an orderly fashion. However, it is not necessarily important whether the media file is created prior to obtaining RFID transponder tag data or after. In addition, steps in which a prompt is issued to the user by the device can be automatically set to carry out the media file tagging procedures without prompting the user. In other words, the device can be programmed to automatically obtain RFID transponder tag data whenever available and contemporaneously tag a media/multimedia file.

Embodiments according to the present invention include a computer program product embodied on a computer readable storage medium for tagging a media/multimedia file created by a device possessing an RFID transponder tag reader with RFID transponder tag content data, the computer program product including: computer program code for creating a media/multimedia file 310, computer program code for determining whether a data containing RFID transponder tag is present and within range of the RFID transponder tag reader 315, computer program code for establishing a connection between the data containing RFID transponder tag and the RFID transponder tag reader 330, computer program code for receiving the data from the RFID transponder tag via the RFID transponder tag reader 335, and computer program code for attaching the received RFID transponder tag data to the media/multimedia file to create a tagged media/multimedia file 345. The device possessing an RFID transponder tag reader may be a mobile camera phone 120, a digital camera 130 or a digital video camera 130. The data contained by the RFID transponder tag 110 may be at least one of text or audio.

The flowcharts and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A system for tagging a media/multimedia file created by a device possessing an RFID transponder tag reader with RFID transponder tag content data, the system **characterized in that** the system comprises:
means for creating a media/multimedia file (120, 130);
means for sensing whether a data-containing RFID transponder tag (110) is present and within range of the RFID transponder tag reader (215);
means for prompting if the data-containing RFID transponder tag (110) is desired when data containing RFID transponder tag is sensed;
means for establishing a connection between the data-containing RFID transponder tag (110) and the RFID transponder tag reader (215) when the data-containing RFID transponder tag is desired;
means for receiving the data from the RFID transponder tag via the RFID transponder tag reader (215);
means for prompting whether it is desired to attach the received RFID transponder tag data to the media/multimedia file; and
means for attaching the received RFID transponder tag data to the media/multimedia file (225) to create a tagged media/multimedia file (240) when it is desired to attach the received RFID transponder tag data to the media/multimedia file.

2. The system of claim 1 wherein the device possessing an RFID transponder tag reader (215) is a mobile camera phone (120).

3. The system of claim 1 wherein the device possessing an RFID transponder tag reader (215) is a digital camera (130).

4. The system of claim 1 wherein the device possessing an RFID transponder tag reader (215) is a digital video camera (130).

5. The system of claim 1 wherein the data contained by the RFID transponder tag (110) is text.

6. The system of claim 1 wherein the data contained by the RFID transponder tag (110) is audio.

7. A method of tagging a media/multimedia file created by a device possessing an RFID transponder tag reader with RFID transponder tag content data, the method **characterized in that** the method comprises:
creating a media file (310);
sensing whether a data-containing RFID transponder tag is present and within range of the RFID transponder tag reader (315);
prompting if the data-containing RFID transponder tag is desired when data containing RFID transponder tag is sensed;
establishing a connection between the data-containing RFID transponder tag and the RFID transponder tag reader (330) when the data-containing RFID transponder tag is desired;
receiving the data from the RFID transponder tag via the RFID transponder tag reader (335);
prompting whether it is desired to attach the received RFID transponder tag data to the media/multimedia file; and
attaching the received RFID transponder tag data to the media/multimedia file to create a tagged media/multimedia file (345) when it is desired to attach the received RFID transponder tag data to the media/multimedia file.

8. The method of claim 7 wherein the device possessing an RFID transponder tag reader is a mobile camera phone (120).

9. The method of claim 7 wherein the device possessing an RFID transponder tag reader (215) is a digital camera (130).

10. The method of claim 7 wherein the device possessing an RFID transponder tag reader (215) is a digital video camera (130).

11. The method of claim 7 wherein the data contained by the RFID transponder tag (110) is text.

12. The method of claim 7 wherein the data contained by the RFID transponder tag (110) is audio.

13. A computer program product embodied on a computer readable storage medium for tagging a media/multimedia file created by a device possessing an RFID transponder tag reader with RFID transponder tag content data, the computer program product **characterized in that** the computer program product comprises:
computer program code for creating a media/multimedia file (310);
computer program code for sensing whether a data-containing RFID transponder tag is present and within range of the RFID transponder tag reader (315);
computer program code for prompting if the data-containing RFID transponder tag is desired when data-containing RFID transponder tag is sensed;
computer program code for establishing a connection between the data-containing RFID transponder tag and the RFID transponder tag reader (330) when the data-containing RFID transponder tag is desired;
computer program code for receiving the data from the RFID transponder tag via the RFID transponder tag reader (335);
computer program code for prompting whether it is desired to attach the received RFID transponder tag data to the media/multimedia file; and
computer program code for attaching the received RFID transponder tag data to the media/multimedia file to create a tagged media/multimedia file (345) when it is desired to attach the received RFID transponder tag data to the media/multimedia file.

14. The computer program product of claim 13 wherein the device possessing an RFID transponder tag reader is a mobile camera phone (120).

15. The computer program product of claim 13 wherein the device possessing an RFID transponder tag reader is a digital camera (130).

16. The computer program product of claim 13 wherein the device possessing an RFID transponder tag reader is a digital video camera (130).

17. The computer program product of claim 13 wherein the data contained by the RFID transponder tag (110) is text.

18. The computer program product of claim 13 wherein the data contained by the RFID transponder tag (110) is audio.

## Patentansprüche

1. System zur Etikettierung einer Media-/Multimediadatei, die von einer einen RFID-Transponder-Tagreader mit RFID-Transponder-Tag-Inhaltsdaten besitzenden Vorrichtung erstellt wurde, wobei das System **dadurch gekennzeichnet ist, dass** das System aufweist:
- eine Einrichtung zum Erstellen einer Media-/Multimediadatei (120, 130);
- eine Einrichtung zum Erkennen, ob ein Daten enthaltender RFID-Transponder-Tag (110) vorliegt und im Bereich des RFID-Transponder-Tagreaders (215) liegt;
- eine Einrichtung zur Bereitmeldung, wenn das Daten enthaltende RFID-Transponder-Tag erkannt wird, falls das Daten enthaltende RFID-Transponder-Tag (110) gewünscht wird;
- eine Einrichtung zum Herstellen einer Verbindung zwischen dem Daten enthaltenden RFID-Transponder-Tag (110) und dem RFID-Transponder-Tagreader (215), wenn das Daten enthaltende RFID-Transponder-Tag gewünscht wird;
- eine Einrichtung zum Empfangen der Daten von dem RFID-Transponder-Tag über den RFID-Transponder-Tagreader (215);
- eine Einrichtung zur Bereitmeldung, ob es gewünscht wird, die empfangenen RFID-Transponder-Tag-Daten an die Media-/Multimediadatei anzuhängen; und
- eine Einrichtung zum Anhängen der empfangenen RFID-Transponder-Tag-Daten an die Media-/Multimediadatei (225), um eine etikettierte Media-/Multimediadatei (240) zu erstellen, wenn es gewünscht wird, die empfangenen RFID-Transponder-Tag-Daten an die Media-/Multimediadatei anzuhängen.

2. System nach Anspruch 1, wobei die einen RFID-Transponder-Tagreader (215) besitzende Vorrichtung ein Fotohandy (120) ist.

3. System nach Anspruch 1, wobei die einen RFID-Transponder-Tagreader (215) besitzende Vorrichtung eine Digitalkamera (130) ist.

4. System nach Anspruch 1, wobei die einen RFID-Transponder-Tagreader (215) besitzende Vorrichtung eine Digitalvideokamera (130) ist.

5. System nach Anspruch 1, wobei es sich bei den in dem RFID-Transponder-Tag (110) enthaltenen Daten um Text handelt.

6. System nach Anspruch 1, wobei es sich bei den in dem RFID-Transponder-Tag (110) enthaltenen Daten um Audiodaten handelt.

7. Verfahren zum Etikettieren einer Media-/Multimediadatei, die von einer einen RFID-Transponder-Tagreader mit RFID-Transponder-Tag-Inhaltsdaten besitzenden Vorrichtung erstellt wurde, wobei das Verfahren **dadurch gekennzeichnet ist, dass** das Verfahren aufweist:
- Erstellen einer Mediadatei (310);
- Erkennen, ob ein Daten enthaltender RFID-Transponder-Tag vorliegt und im Bereich des RFID-Transponder-Tagreaders (315) liegt;
- Bereitschaftsmeldung, wenn das Daten enthaltende RFID-Transponder-Tag erkannt wird, falls das Daten enthaltende RFID-Transponder-Tag (110) gewünscht wird;
- Herstellen einer Verbindung zwischen dem Daten enthaltenden RFID-Transponder-Tag und dem RFID-Transponder-Tagreader (330), wenn das Daten enthaltende RFID-Transponder-Tag gewünscht wird;
- Empfangen der Daten von dem RFID-Transponder-Tag über den RFID-Transponder-Tagreader (335);
- Bereitschaftsmeldung, ob es gewünscht wird, die empfangenen RFID-Transponder-Tag-Daten an die Media-/Multimediadatei anzuhängen; und
- Anhängen der empfangenen RFID-Transponder-Tag-Daten an die Media-/Multimediadatei, um eine etikettierte Media-/Multimediadatei (345) zu erstellen, wenn es gewünscht wird, die empfangenen RFID-Transponder-Tag-Daten an die Media-/Multimediadatei anzuhängen.

8. Verfahren nach Anspruch 7, wobei die einen RFID-Transponder-Tagreader besitzende Vorrichtung ein Fotohandy (120) ist.

9. Verfahren nach Anspruch 7, wobei die einen RFID-Transponder-Tagreader (215) besitzende Vorrichtung eine Digitalkamera (130) ist.

10. Verfahren nach Anspruch 7, wobei die einen RFID-Transponder-Tagreader (215) besitzende Vorrichtung eine Digitalvideokamera (130) ist.

11. Verfahren nach Anspruch 7, wobei es sich bei den in dem RFID-Transponder-Tag (110) enthaltenen Daten um Text handelt.

12. Verfahren nach Anspruch 7, wobei es sich bei den in dem RFID-Transponder-Tag (110) enthaltenen Daten um Audiodaten handelt.

13. Computerprogrammprodukt, das auf einem maschinenlesbaren Speichermedium ausgebildet ist, zum Etikettieren einer Media-/Multimediadatei, die von einer einen RFID-Transponder-Tagreader mit RFID-Transponder-Tag-Inhaltsdaten besitzenden Vorrichtung erstellt wurde, wobei das Computerprogrammprodukt **dadurch gekennzeichnet ist, dass** das Computerprogrammprodukt aufweist:
- einen Computerprogrammcode zum Erstellen einer Media-/Multimediadatei (310);
- einen Computerprogrammcode zum Erkennen, ob ein Daten enthaltender RFID-Transponder-Tag vorliegt und im Bereich des RFID-Transponder-Tagreaders (315) liegt;
- einen Computerprogrammcode zur Bereitmeldung, wenn das Daten enthaltende RFID-Transponder-Tag erkannt wird, falls das Daten enthaltende RFID-Transponder-Tag gewünscht wird;
- einen Computerprogrammcode zum Herstellen einer Verbindung zwischen dem Daten enthaltenden RFID-Transponder-Tag und dem RFID-Transponder-Tagreader (330), wenn das Daten enthaltende RFID-Transponder-Tag gewünscht wird;
- einen Computerprogrammcode zum Empfangen der Daten von dem RFID-Transponder-Tag über den RFID-Transponder-Tagreader (335);
- einen Computerprogrammcode zur Bereitmeldung, ob es gewünscht wird, die empfangenen RFID-Transponder-Tag-Daten an die Media-/Multimediadatei anzuhängen; und
- einen Computerprogrammcode zum Anhängen der empfangenen RFID-Transponder-Tag-Daten an die Media-/Multimediadatei (345), um eine etikettierte Media-/Multimediadatei (240) zu erstellen, wenn es gewünscht wird, die empfangenen RFID-Transponder-Tag-Daten an die Media-/Multimediadatei anzuhängen.

14. Computerprogrammprodukt nach Anspruch 13, wobei die einen RFID-Transponder-Tagreader besitzende Vorrichtung ein Fotohandy (120) ist.

15. Computerprogrammprodukt nach Anspruch 13, wobei die einen RFID-Transponder-Tagreader besitzende Vorrichtung eine Digitalkamera (130) ist.

16. Computerprogrammprodukt nach Anspruch 13, wobei die einen RFID-Transponder-Tagreader besitzende Vorrichtung eine Digitalvideokamera (130) ist.

17. Computerprogrammprodukt nach Anspruch 13, wobei es sich bei den in dem RFID-Transponder-Tag (110) enthaltenen Daten um Text handelt.

18. Computerprogrammprodukt nach Anspruch 13, wobei es sich bei den in dem RFID-Transponder-Tag (110) enthaltenen Daten um Audiodaten handelt.

## Revendications

1. Système de marquage d'un fichier média/multimédia créé par un dispositif équipé d'un lecteur d'étiquette de transpondeur RFID avec des données de contenu d'étiquette de transpondeur RFID, le système étant **caractérisé par le fait que** le système comprend :
- un moyen de création d'un fichier média/multimédia (120, 130) ;
- un moyen de détection si une étiquette de transpondeur RFID contenant des données (110) est présente dans la plage du lecteur d'étiquette de transpondeur RFID (216) ;
- un moyen de sollicitation si l'étiquette de transpondeur RFID contenant des données (110) est souhaitée quand une étiquette de transpondeur RFID contenant des données est détectée ;
- un moyen d'établissement d'une connexion entre l'étiquette de transpondeur RFID contenant des données (110) et le lecteur d'étiquette de transpondeur RFID (215) quand l'étiquette de transpondeur RFID contenant des données est souhaitée ;
- un moyen de réception des données provenant de l'étiquette de transpondeur RFID par l'intermédiaire du lecteur d'étiquette de transpondeur RFID (215) ;
- un moyen de sollicitation s'il est souhaité d'annexer les données d'étiquette de transpondeur RFID reçues au fichier média/multimédia ; et
- un moyen d'annexage des données d'étiquette de transpondeur RFID reçues au fichier média/multimédia (225) pour créer un fichier média/multimédia étiqueté (240) quand il est souhaité d'annexer les données d'étiquette de transpondeur RFID reçues au fichier média/multimédia.

2. Système selon la revendication 1 dans lequel le dispositif possédant un lecteur d'étiquette de transpondeur RFID (215) est un téléphone appareil photo portable (120).

3. Système selon la revendication 1 dans lequel le dispositif possédant un lecteur d'étiquette de transpondeur RFID (215) est un appareil photo numérique (130).

4. Système selon la revendication 1 dans lequel le dispositif possédant un lecteur d'étiquette de transpondeur RFID (215) est une caméra vidéo numérique (130).

5. Système selon la revendication 1 dans lequel les données contenues par l'étiquette de transpondeur RFID (110) sont des données de texte.

6. Système selon la revendication 1 dans lequel les données contenues par l'étiquette de transpondeur RFID (110) sont des données audio.

7. Procédé de marquage d'un fichier média/multimédia créé par un dispositif équipé d'un lecteur d'étiquette de transpondeur RFID avec des données de contenu d'étiquette de transpondeur RFID, le procédé étant **caractérisé par le fait que** le procédé comprend :
- la création d'un fichier média (310) ;
- la détection si une étiquette de transpondeur RFID contenant des données (110) et présente dans la plage du lecteur d'étiquette de transpondeur RFID (315) ;
- la sollicitation si l'étiquette de transpondeur RFID contenant des données est souhaitée quand une étiquette de transpondeur RFID contenant des données est détectée ;
- l'établissement d'une connexion entre l'étiquette de transpondeur RFID contenant des données et le lecteur d'étiquette de transpondeur RFID (330) quand l'étiquette de transpondeur RFID contenant des données est souhaitée ;
- la réception des données provenant de l'étiquette de transpondeur RFID par l'intermédiaire du lecteur d'étiquette de transpondeur RFID (335) ;
- la sollicitation s'il est souhaité d'annexer les données d'étiquette de transpondeur RFID reçues au fichier média/multimédia ; et
- l'annexage des données d'étiquette de transpondeur RFID reçues au fichier média/multimédia pour créer un fichier média/multimédia étiqueté (345) quand il est souhaité d'annexer les données d'étiquette de transpondeur RFID reçues au fichier média/multimédia.

8. Procédé selon la revendication 7 dans lequel le dispositif possédant un lecteur d'étiquette de transpondeur RFID est un téléphone appareil photo portable (120).

9. Procédé selon la revendication 7 dans lequel le dispositif possédant un lecteur d'étiquette de transpondeur RFID (215) est un appareil photo numérique (130).

10. Procédé selon la revendication 7 dans lequel le dispositif possédant un lecteur d'étiquette de transpondeur RFID (215) est une caméra vidéo numérique (130).

11. Procédé selon la revendication 7 dans lequel les données contenues par l'étiquette de transpondeur RFID (110) sont des données de texte.

12. Procédé selon la revendication 7 dans lequel les données contenues par l'étiquette de transpondeur RFID (110) sont des données audio.

13. Programme informatique intégré sur un support de stockage lisible par ordinateur pour marquer un fichier média/multimédia créé par un dispositif équipé d'un lecteur d'étiquette de transpondeur RFID (215) avec des données de contenu d'étiquette de transpondeur RFID, le programme informatique étant **caractérisé par le fait que** le programme informatique comprend :
- un code de programme informatique destiné à créer un fichier média/multimédia (310) ;
- un code de programme informatique destiné à détecter si une étiquette de transpondeur RFID contenant des données et présente dans la plage du lecteur d'étiquette de transpondeur RFID (315) ;
- un code de programme informatique destiné à solliciter si l'étiquette de transpondeur RFID contenant des données est souhaitée quand une étiquette de transpondeur RFID contenant des données est détectée ;
- un code de programme informatique destiné à établir une connexion entre l'étiquette de transpondeur RFID contenant des données et le lecteur d'étiquette de transpondeur RFID (215) quand l'étiquette de transpondeur RFID contenant des données est souhaitée ;
- un code de programme informatique destiné à recevoir les données provenant de l'étiquette de transpondeur RFID par l'intermédiaire du lecteur d'étiquette de transpondeur RFID (335) ;
- un code de programme informatique destiné à solliciter s'il est souhaité d'annexer les données d'étiquette de transpondeur RFID reçues au fichier média/multimédia ; et
- un code de programme informatique destiné à annexer les données d'étiquette de transpondeur RFID reçues au fichier média/multimédia pour créer un fichier média/multimédia étiqueté (345) quand il est souhaité d'annexer les données d'étiquette de transpondeur RFID reçues au fichier média/multimédia.

14. Programme informatique selon la revendication 13 dans lequel le dispositif possédant un lecteur d'étiquette de transpondeur RFID est un téléphone appareil photo portable (120).

15. Programme informatique selon la revendication 13 dans lequel le dispositif possédant un lecteur d'étiquette de transpondeur RFID est un appareil photo numérique (130).

16. Programme informatique selon la revendication 13 dans lequel le dispositif possédant un lecteur d'étiquette de transpondeur RFID est une caméra vidéo numérique (130).

17. Programme informatique selon la revendication 13 dans lequel les données contenues par l'étiquette de transpondeur RFID (110) sont des données de texte.

18. Programme informatique selon la revendication 13 dans lequel les données contenues par l'étiquette de transpondeur RFID (110) sont des données audio.
